## Europäisches Patentamt
## European Patent Office
## Office européen des brevets

(19)

(11) Veröffentlichungsnummer: **0 167 186**

**A2**

(12)

# EUROPÄISCHE PATENTANMELDUNG

(21) Anmeldenummer: **85200707.9**

(22) Anmeldetag: **04.05.85**

(51) Int. Cl.⁴: **C 10 J 3/08**

(30) Priorität: **01.06.84 DE 3420515**

(43) Veröffentlichungstag der Anmeldung:
**08.01.86 Patentblatt 86/2**

(84) Benannte Vertragsstaaten:
**DE FR GB NL**

(71) Anmelder: **METALLGESELLSCHAFT AG**
**Reuterweg 14 Postfach 3724**
**D-6000 Frankfurt/M.1(DE)**

(72) Erfinder: **Rudolph, Paul**
**Friedrichsdorfer Strasse 17**
**D-6380 Bad Homburg(DE)**

(72) Erfinder: **Hafke, Carl, Dr.**
**Waldecker Strasse 19**
**D-6000 Frankfurt am Main 50(DE)**

(72) Erfinder: **Vierrath, Helmut, Dr.**
**Neckarstrasse 41**
**D-6078 Neu-Isenburg(DE)**

(74) Vertreter: **Rieger, Harald**
**Reuterweg 14**
**D-6000 Frankfurt a.M.(DE)**

(54) **Verfahren zum Vergasen fester Brennstoffe.**

(57) Die festen Brennstoffe werden unter einem Druck von 5 bis 150 bar mit Sauerstoff, Wasserdampf und/oder Kohlendioxid enthaltenden Vergasungsmitteln im Festbett vergast. Die bei der Vergasung verbleibenden unverbrennlichen mineralischen Bestandteile werden als flüssige Schlacke abgezogen. In den unteren Bereich des Festbettes düst man staubförmigen und feinkörnigen Brennstoff mit einem Trägergas ein. Der staubförmige und feinkörnige Brennstoff weist einen Korngrößenbereich bis etwa 6 mm auf, wobei mindestens 50 Gew.% der Brennstoffkörner kleiner als 3 mm sind. Vorzugsweise verwendet man als Trägergas ein methanreiches Gas, das zu mindestens 30 Vol.% aus Methan besteht. Als Trägergas kann methanreiches Abgas einer Syntheseanlage verwendet werden, z.B. Abgas einer Methanol- oder Ammoniaksynthese.

F i g.1

METALLGESELLSCHAFT
Aktiengesellschaft

29. Mai 1984
WGN/MRM
0167186

Prov. Nr. 8972 LÖ

## Verfahren zum Vergasen fester Brennstoffe

Die Erfindung betrifft ein Verfahren zum Vergasen fester Brennstoffe unter einem Druck von 5 bis 150 bar mit Sauerstoff, Wasserdampf und/oder Kohlendioxid enthaltenden Vergasungsmitteln in einem Reaktor, in welchem der Brennstoff ein Festbett bildet, das sich langsam nach unten bewegt, in dessen unteren Bereich die Vergasungsmittel eingeleitet werden und unter dem man die unverbrennlichen mineralischen Bestandteile als flüssige Schlacke abzieht.

Die Vergasung fester Brennstoffe ist bekannt und z.B. in Ullmanns Enzyklopädie der Technischen Chemie, 4. Auflage (1977), Band 14, Seiten 383 bis 386, dargestellt. Einzelheiten des Vergasungsverfahrens mit Abzug flüssiger Schlacke sind in den britischen Patentschriften 1 507 905, 1 508 671 und 1 512 677 sowie in der deutschen Auslegeschrift 29 20 922 und der deutschen Offenlegungsschrift 27 38 932 erläutert.

0167186

Bei dem für die Vergasung geeigneten Brennstoff handelt es sich üblicherweise um Kohle, auch um Braunkohle, sowie Koks, z.B. Petrolkoks, doch kann auch anderes kohlenstoffhaltiges Material, wie z.B. Holz, Torf oder Biomasse vergast werden. Dem Festbett gibt man von oben körnigen Brennstoff mit einer Korngröße etwa im Bereich von 3 bis 60 mm auf, so daß das Bett genügend gasdurchlässig ist. Der körnige Brennstoff kann auch einen gewissen Anteil an staubförmigem und feinkörnigem Brennstoff enthalten, doch darf dieser Anteil nicht zu groß werden, damit die ausreichende Durchgasung des Bettes auch im oberen Bereich gewährleistet ist. Bei der Gewinnung der Kohle oder auch aus anderen Gründen fällt der zu vergasende Brennstoff jedoch zum erheblichen Teil in feinkörniger und staubförmiger Form an, und es muß dafür gesorgt werden, auch diesen Brennstoffanteil problemlos zu vergasen.

Eine Möglichkeit ist, den staubförmigen und feinkörnigen Brennstoff zu pelletieren oder zu brikettieren und die Formkörper der Vergasung aufzugeben. Diese Agglomerierung stellt jedoch einen nicht unerheblichen Aufwand dar. Der Erfindung liegt deshalb die Aufgabe zugrunde, auch den für die Vergasung im Festbett weniger geeigneten Anteil an staubförmigem und feinkörnigem Brennstoff dem Vergasungsreaktor aufgeben zu können. Erfindungsgemäß wird dies dadurch erreicht, daß man in den unteren Bereich des Festbettes staubförmigen und feinkörnigen Brennstoff mit einem Trägergas eindüst. Das Trägergas sorgt hierbei für eine feine Verteilung des staubförmigen und feinkörnigen Brennstoffs, wobei es selbst mit den Vergasungsmitteln reagiert, wenn es sich um ein methanreiches Trägergas handelt. So ist es möglich, daß je nach Arbeitsdruck pro eingedüstem $Nm^3$ Trägergas etwa 1 bis 150 kg staubförmiger und feinkörniger Brennstoff in den Reaktor eingetragen werden können.

Der auf die erläuterte Weise in die Vergasung eingespeiste staubförmige und feinkörnige Brennstoff weist einen Korngrößenbereich bis etwa 6 mm auf, und mindestens 50 Gew.% der Brennstoffkörner sind kleiner als 3 mm. Üblicherweise besteht das methanreiche Trägergas zu mindestens 30 Vol.% aus Methan, wenn man in die Vergasung Kohle einsetzt.

Nach einer Weiterbildung der Erfindung verwendet man als Trägergas methanreiches Abgas, wie es etwa in einer Syntheseanlage anfällt. Hierbei ist es zweckmäßig, das Produktgas der Vergasung zu Synthesegas weiterzuverarbeiten und dieses Synthesegas einer Synthese zu unterwerfen, in welcher ein methanreiches Abgas anfällt. Dieses Abgas kann vorteilhafterweise als Trägergas in die Vergasung geleitet werden, und es entfällt die sonst übliche separate Methanspaltung. Bei der Synthese kann es sich z.B. um eine Methanolsynthese handeln, bei der bekanntlich in der Syntheseschleife und in der Destillation zum Abbrennen des gebildeten Methanols ein methanreiches Abgas separiert wird. Auch methanhaltiges Abgas einer Ammoniaksynthese kann verwendet werden.

Unabhängig von der Verwendung des methanreichen Trägergases zum Eindüsen von Brennstoffstaub und Feinkorn kann man das methanreiche Gas teilweise auch als Spülmedium für Meßstellen am Vergasungsreaktor einsetzen.

Einzelheiten des Verfahrens werden mit Hilfe der Zeichnung näher erläutert. Es zeigt:

Fig. 1  den Vergasungsreaktor in schematischer Darstellung und
Fig. 2  ein Flußdiagramm für die Kopplung der Vergasung mit einer Methanolsynthese.

Aus der Schleuse 1 mit bewegbarem Ventil 2 wird körniger Brennstoff, zumeist Kohle, mit Korngrößen etwa im Bereich von 3 bis 60 mm periodisch dem Reaktor 3 aufgegeben. Der im Reaktor zu

0167186

vergasende Brennstoff bildet ein Festbett 4, das genügend Gasdurchlässigkeit für die aufsteigenden Vergasungsmittel und das
Produktgas aufweist.

Die Vergasungsmittel, üblicherweise Sauerstoff, Wasserdampf
und/oder Kohlendioxid, werden durch mehrere Düsen 5 in den unteren Bereich des Reaktors eingeleitet. In der Zeichnung ist nur
eine Düse angedeutet. Die unverbrennlichen mineralischen Bestandteile des Brennstoffs sammeln sich als flüssige Schlacke 6 auf
dem Boden des Reaktors und werden kontinuierlich oder periodisch
durch einen Auslaß 7 in einen Schlackenbehälter 8 geleitet. Erzeugtes Produktgas zieht man im oberen Bereich des Reaktors durch
die Leitung 9 ab.

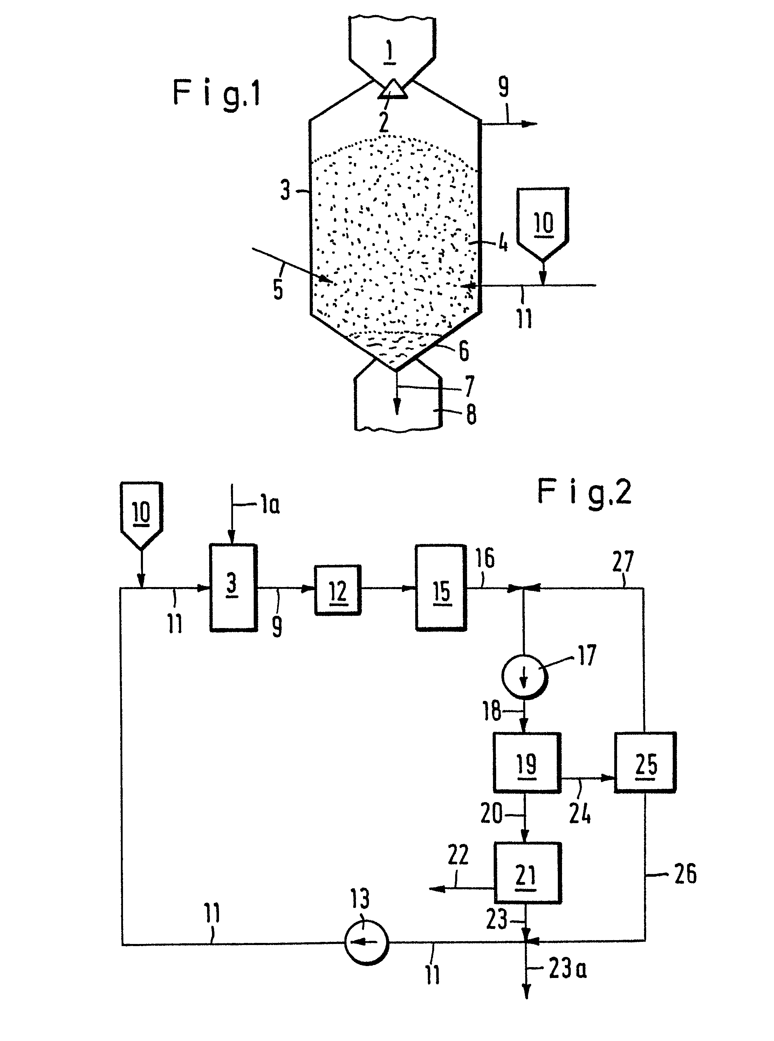

Staubförmige und feinkörnige Brennstoffe, die nachfolgend kurz
"Feinkohle" genannt werden, gelangen von einem Vorratsbehälter 10
in ein methanreiches Trägergas, das man in der Leitung 11 in den
unteren Bereich des Reaktors 3 eindüst (vgl. auch Fig. 2). Als
Trägergas kann man Stickstoff, Erdgas oder besser ein methanreiches Abgas verwenden, das z.B. in einem dem Reaktor 3 nachgeschalteten Prozeß anfällt.

Anhand der Figur 2 wird erläutert, wie sich eine Methanolsynthese, die mit dem Reaktor 3 gekoppelt ist , durch Rückführen ihres
methanreichen Abgases in den Reaktor vereinfacht. Hierbei wird
dem Vergasungsreaktor 3 durch die Leitung 1a körniger Brennstoff
zugeführt und gleichzeitig Feinkohle vom Behälter 10 mit Hilfe
eines methanreichen Trägergases aus der Leitung 11 in den Reaktor
eingedüst. Das Produktgas der Leitung 9 wird zunächst einer üblichen katalytischen Konvertierung 12 zum Erhöhen des $H_2 : CO$ -
Volumenverhältnisses auf etwa 2,2 unterzogen und gelangt dann in
eine Gasreinigung 15, um einerseits mitgerissene Feststoffe und
andererseits hauptsächlich die in der nachfolgenden Synthese
störenden Bestandteile, wie $H_2S$ und andere Schwefelverbindungen, sowie einen Teil des $CO_2$ abzutrennen. Diese Gasreinigung

erfolgt in bekannter Weise. Das gereinigte Synthesegas der Leitung 16 wird durch einen Kompressor 17 verdichtet und in der Leitung 18 der Methanolsynthese 19 zugeführt. In der Methanolsynthese wird das Synthesegas, das hauptsächlich aus Wassserstoff und Kohlenmonoxid besteht, an kupferhaltigen Katalysatoren bei Temperaturen etwa im Bereich von 200 bis 300$^{\circ}$C und Drücken im Bereich von 50 bis 100 bar umgesetzt. Einzelheiten der Methanolsynthese sind in den deutschen Patenten 1 668 390, 1 930 702 und 2 024 301 beschrieben.

In der Methanolsynthese 19 wird das Rohmethanol auskondensiert. Gleichzeitig fällt ein Rückführgas in Leitung 24 an, bestehend aus nicht umgesetztem CO und $H_2$ sowie Methan und Inerten. Dieses Gas wird einer Trennanlage 25, z.B. einer Druck-Wechsel-Anlage mit geeigneten Adsorbentien, wie Molekularsieben, zugeführt. Das CO- und $H_2$-reiche Gas wird dabei abgetrennt und in die Leitung 27 zur Mischung mit dem Synthesegas der Leitung 16 zurückgeführt. Der methan- und inertenreiche Strom wird aus der Schleife ausgeschleust und steht in der Leitung 26 als Trägergas zur Verfügung. Das Produkt der Methanolsynthese 19 wird in der Leitung 20 einer Destillationsanlage 21 zugeführt, aus welcher man in der Leitung 22 Methanol abzieht.

In der Destillationsanlage 21 wird ein methanreiches Abgas abgetrennt, das die Anlage in der Leitung 23 verläßt. Ein Teil dieses Abgases wird in der Leitung 11 zusammen mit dem Gas aus der Leitung 26 über das Gebläse 13 zum Vergasungsreaktor 3 zurückgeführt. Der nicht zurückgeführte Teil des Abgases wird zweckmäßigerweise z.B. als sauberes Heizgas verwendet und zu diesem Zweck in der Leitung 23a abgezweigt.

Beispiel:

In einer der Zeichnung (Fig. 1 und 2) entsprechenden Anlage, die auf die Erzeugung von täglich 1 000 t Methanol ausgelegt ist, wird wie folgt gearbeitet (einzelne der Laten wurden berechnet):

Pro Tag werden dem Vergasungsreaktor 3 durch die Schleuse 1 1500 t körnige Kohle mit einem Kornspektrum von 3 bis 60 mm aufgege- ben. Die Vergasung dieser Kohlemenge erfolgt mit 600 t Sauerstoff und 500 t Wasserdampf bei einem Druck von 25 bar. Stündlich wer- den 8 t Feinkohle zusammen mit 850 Nm$^3$ methanreichem Trägergas in den Reaktor geleitet.

Pro Tag werden aus der Vergasung in der Leitung 9  106 000 Nm$^3$ Rohgas mit folgender Zusammensetzung (trocken gerechnet) abgezogen:

| | |
|---|---|
| CO | 56 Vol.% |
| $H_2$ | 29 Vol.% |
| $CO_2$ | 3 Vol.% |
| $CH_4$ | 7 Vol.% |
| $N_2$ | 2 Vol.% |
| Schwefelverbindungen und Inerte | 1 Vol.%. |

Nach Konvertierung, Gasreinigung und Zumischung von rückgeführtem Gas aus der Leitung 27 wird der Methanolsyntheseanlage, die nach dem bekannten Niederdruckverfahren von Lurgi mit Röhrenreaktor arbeitet, durch die Leitung 18 ein Synthesegas etwa folgender Zusammensetzung in einer Menge von 111 000 Nm$^3$/h zugeführt.

| | |
|---|---|
| CO | 25 Vol.% |
| $H_2$ | 63 Vol.% |
| $CO_2$ | 4 Vol.% |
| $CH_4$ | 6 Vol.% |
| $N_2$ | 2 Vol.% |

Die Trennanlage 25 ist eine Druckwechsel-Adsorptionsanlage mit Molekularsieb, sie liefert in der Leitung 26 12000 $Nm^3$/h Abgas mit 50 Vol.% Methan. Aus der Destillation 21 kommen pro Stunde 1300 $Nm^3$ Abgas mit einem Methangehalt von 40 Vol.%. Die beiden Abgasströme werden vereinigt und ein Teilstrom von 850 $Nm^3$/h durch die Leitung 11 als Trägergas in den Reaktor 3 zurückgeführt.

Zusammensetzung des Trägergases:

| | |
|---|---|
| $CO_2$ | 12 Vol.% |
| CO | 8 Vol.% |
| $H_2$ | 12 Vol.% |
| $N_2$ | 17 Vol.% |
| $CH_4$ und höhere Kohlenwasserstoffe | 51 Vol.% |

— 8 —

0167186

Patentansprüche

1. Verfahren zum Vergasen fester Brennstoffe unter einem Druck
   von 5 bis 150 bar mit Sauerstoff, Wasserdampf und/oder Kohlendioxid enthaltenden Vergasungsmitteln in einem Reaktor, in
   welchem der Brennstoff ein Festbett bildet, das sich langsam
   nach unten bewegt, in dessen unteren Bereich die Vergasungsmittel eingeleitet werden und unter dem man die unverbrennlichen mineralischen Bestandteile als flüssige Schlacke abzieht, dadurch gekennzeichnet, daß man in den unteren Bereich
   des Festbettes staubförmigen und feinkörnigen Brennstoff mit
   einem Trägergas eindüst.

2. Verfahren nach Anspruch 1, dadurch gekennzeichnet, daß der
   staubförmige und feinkörnige Brennstoff einen Korngrößenbereich bis etwa 6 mm aufweist und mindestens 50 Gew.% der
   Brennstoffkörner kleiner als 3 mm sind.

3. Verfahren nach Anspruch 1 oder 2, dadurch gekennzeichnet, daß
   man als Trägergas ein methanreiches Gas, das zu mindestens
   30 Vol.% aus Methan besteht, verwendet.

4. Verfahren nach Anspruch 1 oder einem der folgenden, dadurch
   gekennzeichnet, daß man als Trägergas methanreiches Abgas
   einer Syntheseanlage verwendet.

5. Verfahren nah Anspruch 4, dadurch gekennzeichnet, daß man das
   Produktgas der Vergasung zu Synthesegas verarbeitet, das man
   einer Synthese unterwirft, wobei man ein methanreiches Abgas
   der Synthese als Trägergas in die Vergasung leitet.

0167186

6. Verfahren nach Anspruch 4 oder 5, <u>dadurch gekennzeichnet,</u> daß es sich bei der Synthese um eine Methanolsynthese oder Ammoniaksynthese handelt.

# Fig.1

# Fig.2